Europäisches Patentamt

European Patent Office

Office européen des brevets

(11) Veröffentlichungsnummer: **0 509 286 A1**

## (12) EUROPÄISCHE PATENTANMELDUNG

(21) Anmeldenummer: **92105191.8**

(22) Anmeldetag: **26.03.92**

(51) Int. Cl.5: **F24J 2/06**, B01J 19/12

(30) Priorität: **16.04.91 CH 1140/91**

(43) Veröffentlichungstag der Anmeldung:
**21.10.92 Patentblatt 92/43**

(84) Benannte Vertragsstaaten:
**AT BE CH DE DK ES FR GB GR IT LI LU NL PT SE**

(71) Anmelder: **Schweizerische Eidgenossenschaft PAUL SCHERRER INSTITUT**

**CH-5232 Villigen PSI(CH)**
Anmelder: **BUEHLER AG**

**CH-9240 Uzwil(CH)**

(72) Erfinder: **Imhof, Arthur**
**Dägerlirain 8**
**CH-5200 Windisch(CH)**
Erfinder: **Zimmermann, René**
**Hüserenstrasse 15**
**CH-9523 Züberwangen(CH)**
Erfinder: **Marugg, Christoph**
**658 Washington Street**
**Hoosten, OH 44691(US)**
Erfinder: **Kuebler, Ingo**
**Stückelbergstrasse 9**
**CH-9000 St. Gallen(CH)**

(74) Vertreter: **Révy von Belvárd, Peter**
**BÜHLER AG, Patentabteilung**
**CH-9240 Uzwil(CH)**

(54) **Reaktor.**

(57) Einem Reaktor (2) ist eine optische Sammeleinrichtung (1) zur Einstrahlung von Sonnenenergie zugeordnet. Die so gesammelten Sonnenstrahlen (15) werden über eine offene und durch keinerlei Fensterwand abgedeckte Einstrahlöffnung (16) in den Reaktorraum (20) eingeleitet. Um das Austreten von Reaktionsgasen aus dem Reaktorraum (20) über die Oeffnung (16) zu vermeiden, sind Einrichtungen (12, 22, 23) zum aufrechterhalten eines maximal Null betragenden Differenzdruckes zwischen dem Reaktorraum (20) und der Aussenseite des Reaktors (2) vorgesehen.

Fig.1

Die Erfindung bezieht sich auf einen Reaktor nach dem Oberbegriff des Anspruches 1. Ein solcher Reaktor ist insbesondere ein chemischer Reaktor, doch kann in ihm ganz allgemein unter Einfluss von Sonnenstrahlen eine physikalische und/oder chemische Umsetzung erfolgen.

Obwohl, insbesondere zu Zeitpunkten rasch ansteigender Energiepreise, die Forschungsaktivitäten zum Einsatz von alternativen Energiequellen, insbesondere der Sonnenenergie, stark vorangetrieben werden, stehen diesen Bestrebungen auf der einen Seite die relativ geringe Energiedichte und auf der anderen Seite die mit einem schlechten Wirkungsgrad ausgestatteten Möglichkeiten zur Speicherung von Energie, sei es in Form von Wärme oder elektrischem Strom, gegenüber.

Eine Form des Einsatzes der Sonnenenergie, die sich auch in den Breiten von Mitteleuropa begrenzt durchgesetzt hat, besteht in der Warmwasseraufbereitung für Schwimmbecken. Hierbei haben sich sogenannte Flachkollektoren durchgesetzt, durch welche das zu erwärmende Wasser gepumpt wird, wobei die Kollektoren in der Regel aus schwarzen Materialien, z.B. mit Russ eingefärbtem Polyäthylen oder Polypropylen, ausgeführt sind.

Eine weitere Form des Einsatzes von Sonnenenergie besteht in der Direktumwandlung derselben in elektrischen Strom, wobei die Konvertierung vorzugsweise in Siliziumzellen erfolgt. Eine derartige Einrichtung ist besonders aufwendig, jedoch dann von Vorteil, wenn an entfernt vom öffentlichen Stromnetz liegenden Stellen geringe Strommengen benötigt werden. Als Beispiele sind zu nennen: elektrisch betriebene Verkehrseinrichtungen auf Autobahnen, Funkeinrichtungen auf Berghütten u.dgl.

Eine weitere Möglichkeit der Umwandlung von Sonnenenergie besteht mit den sogenannten Turmanlagen. Hierbei befindet sich im Zentrum einer Fläche ein Turm, in welchem ein Verdampfer angeordnet ist, auf den Spiegel, die am Boden angeordnet sind, die Sonnenstrahlen richten. Um den Wirkungsgrad der Anlage zu erhöhen, werden die Spiegel, welche aus Metallfolien, beschichteten Kunststoffolien od.dgl. bestehen, entsprechend dem Sonnenstand nachgerichtet, sodass jeweils alle Spiegel den Dampferzeuger beaufschlagen.

Aus der US-PS 4,280,449 wird ein Dampferzeuger bekannt, bei dem Wasser über eine lateral angeordnete Öffnung mit einem Fenster im Reaktor durch Sonnenstrahlen beaufschlagt wird, wobei zusätzlich eine Beheizung durch brennbare Gase erfolgt. Gerade aber bei hohen Temperaturen werden solche Fenster zu einem Problem. Würde aber bei einem solchen Reaktor das Fenster weggelassen, so bestünde die Gefahr des Austretens der Reaktionsgase.

Die vorliegende Erfindung hat somit zum Ziel, einen Reaktor der eingangs genannten Art so auszubilden, dass er einen erhöhten Wirkungsgrad besitzt. Diese Aufgabe wird durch die kennzeichnenden Merkmale des Anspruches 1 gelöst.

Dadurch, dass eine Trennwand bzw. ein Fenster fehlt, kann auch kein Beschlag entstehen, der das nutzbare Sonnenlicht reduzieren könnte. Gleichzeitig wird durch die Einstellung der Druckdifferenz auf maximal Null gesichert, dass trotz des Fehlens eines Fensters ein Austreten von Gasen vermieden wird. Dabei kann durch die Einleitung der Sonnenstrahlen über eine Sammeleinrichtung und eine fensterfreie Öffnung in dem Reaktor, eine höhere Energiedichte erreicht werden, wobei die durch Fenster entstehenden Probleme (hinsichtlich Material und allenfalls der Energieverminderung durch Beschlagen desselben) vermieden sind.

Die Konzentration des Fluides im Zentrum wird durch eine Ausbildung nach Anspruch 2 begünstigt. Dabei kann eine weitere Verbesserung durch wenigstens eines der Merkmale des Anspruches 3 erzielt werden.

An sich liessen sich die Sonnenstrahlen im Reaktorraum auch mehr oder minder gleichmässig verteilen, doch ist eine optische Anordnung gemäss Anspruch 4 bevorzugt, weil dann höhere Energiekonzentrationen, vorzugsweise gerade am richtigen, durch die Erfindung geschaffenen Ort, möglich sind.

Eine weitere Verbesserung hinsichtlich des Wirkungsgrades ergibt sich durch wenigstens eine der Massnahmen des Anspruches 5, wobei im ersten Fall [Merkmal a)] eine Umlenkung des Fluidstromes und damit eine längere Verweilzeit im Reaktorraum, mit höherer Energieaufladung, erreicht wird, im zweiten Falle [Merkmal b)] auch die Abwärme gut genutzt werden kann.

Um den unterschiedlichen Einstrahlungswerten der Sonnenenergie Rechnung zu tragen, können die Fluide vor Einleitung in den Reaktor beheizbar sein, vorzugsweise durch Nutzung von Abwärme über eine Wärmetauschanordnung.

Mündet zumindest in eine Fluidzuleitung, insbesondere Gaszuleitung, zum Reaktor eine Fördereinrichtung für partikulierte Feststoffe und/oder Flüssigkeitseinleitöffnung, z.B. nach einer Venturidüse, so kann auf besonders einfache Weise ein mit Feststoffteilchen und/oder Flüssigkeit beladenes Fluid erhalten werden.

Im folgenden wird die Erfindung anhand der Zeichnungen näher erläutert. Es zeigen:

Fig. 1      zeigt einen erfindungsgemäss ausgebildeten Reaktor, wozu die

Fig. 2 und 3      Ausführungsvarianten hinsichtlich der Reaktorform aber auch hinsichtlich der Anordnung zur Einstellung der Druckdifferenz veranschaulichen;

Fig. 4      eine weitere mögliche Ausbildungsform des Reaktors; anhand der

Fig. 5      wird ein erfindungsgemässer Reaktor gezeigt, dem zwei unterschiedliche Fluide zuführbar sind, und der daher eine besondere Einrichtung zur Aufrechterhaltung einer maximalen Null betragenden Druckdifferenz aufweist; und die

Fig. 6 bis 15      weitere Reaktorformen, denen eine der in den vorherigen Figuren dargestellte Anordnung zur Druckdifferenzeinstellung zugeordnet werden kann.

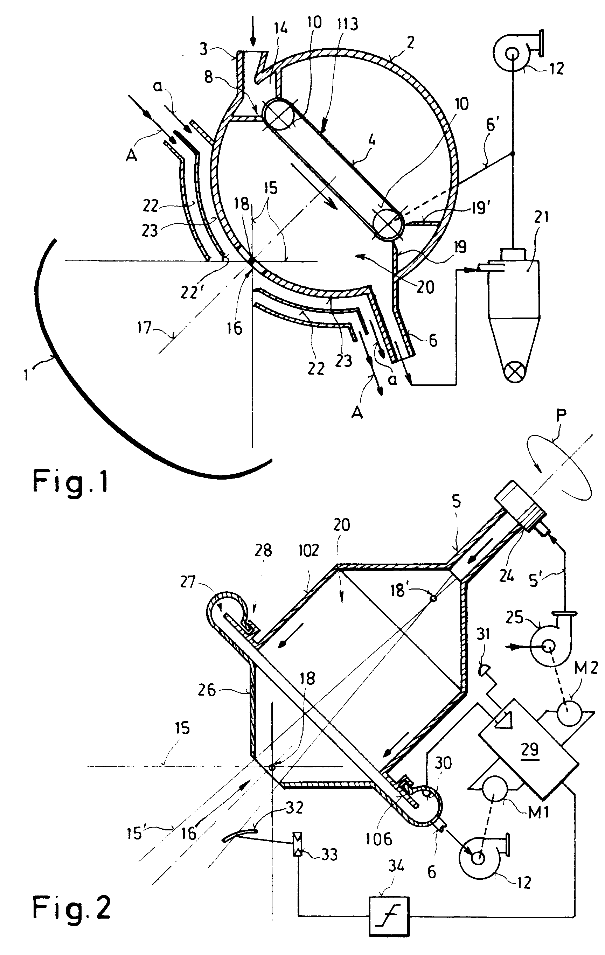

In Fig. 1 ist eine Sammeleinrichtung 1 für Sonnenstrahlen lediglich schematisch dargestellt und kann beispielsweise durch einen Parabolspiegel aber auch andere, insbesondere optische, Systeme gebildet sein, beispielsweise einer Nachführeinrichtung zum Ausrichten auf den jeweiligen Sonnenstand. Dabei kann die Anordnung gewünschtenfalls auch eine Mitbewegung des Reaktors 2 veranlassen, falls auf die Aufrechterhaltung völlig gleicher Einstrahlbedingungen innerhalb des Reaktorraumes Wert gelegt wird. Bevorzugt bleibt aber der Reaktor stationär.

Durch derartige optische Einrichtungen kann eine Konzentrierung der Strahlen so weit durchgeführt werden, dass Legierungen, welche beispielsweise Schmelzpunkte über 2.000°C aufweisen, niedergeschmolzen werden können. Die erfindungsgemässen Reaktoren sind allerdings auch für niedrigere Temperaturen, also beispielsweise zwischen 600°C und 900°C, insbesondere ca. 800°C, geeignet, wobei bevorzugt endotherme Reaktionen durchgeführt werden können. Bevorzugt sind Spaltreaktionen zur Aufbereitung von Energieträgern. Eine weitere Möglichkeit Energie zu speichern besteht beispielsweise darin, dem Fluid eine Mischung aus Natrium und Kalium einzuleiten, wobei die Teilchen im Reaktor schmelzen und die Schmelze einem Latentwärmespeicher zugeführt wird, in welchem bei teilweise Erstarren der Schmelze Wärme abgegeben werden kann.

Der in Fig. 1 dargestellte Reaktor 2 ist rotationssymmetrisch ausgebildet, d.h. z.B. Zylinder- oder kugelförmig. An seiner Oberseite besitzt der Reaktor 2 einen Einfüllstutzen 3 für zu behandelndes pulverförmiges oder körniges Material. Dieses Material gelangt zunächst in eine Speisekammer 14, die einen allenfalls einstellbaren, Speisespalt 8 besitzt. Im Bereiche dieses Speisespaltes läuft ein Bandförderer 113, dessen Band 4 luftdurchlässig ist und unter der Wirkung eines z.B. an eine als Siebtrommel ausgebildete Fördertrommel angelegten Unterdruckes steht.

In Fig. 1 ist nur eine der Fördertrommeln 10 mit einem Sauggebläse 12 verbunden, doch können auch beide Fördertrommeln 10 an das Gebläse 12 angeschlossen sein. Es versteht sich ferner, dass die Seitenwände des Bandförderers 113 nach Möglichkeit gegen das Eindringen von staub- oder partikelförmigem Gut in an sich bekannter Weise abgedichtet sind.

Somit wird also das durch den Speiseschlitz 8 gelangte Material an die Oberfläche des Bandes 4 gesaugt und verteilt sich auf dieser, bevor das zu behandelnde Material durch den Reaktionsraum 20 des Reaktors 2 geführt wird. In diesem Reaktionsraum wird das Material der Einwirkung von mit Hilfe des Sammelsystems 1 gesammelter Sonnenenergie ausgesetzt, die über eine an eine Achse 17 gelegene freie Öffnung 16 in den Reaktionsraum 20 einströmt.

Um die in den Reaktor 2 eingebrachte Energie innerhalb des Raumes 20 möglichst gleichmässig zu verteilen, ist es vorteilhaft, wenn das über das Sammelsystem 1 eingestrahlte Strahlenbündel 15 seinen Brennpunkt 18 im Bereiche der Öffnung 16, vorzugsweise an ihr oder innerhalb des Reaktionsraumes 20 besitzt. Sobald die Energie des Strahlenbündels 15 in den Reaktionsraum 20 eingebracht ist, kann sie ja von dort aus nicht mehr ohne weiteres entweichen, und es ist zum Zurückhalten dieser Wärmeenergie vorteilhaft, wenn der Reaktor 2 in nicht dargestellter Weise isolierte Wandungen besitzt. Als zusätzliche oder alternative Massnahme kann vorgesehen sein, dass der Reaktor 2 an seinen Innenflächen mit einer strahlungsabweisenden Beschichtung versehen ist.

Die Öffnung 16 birgt natürlich die Gefahr an sich, dass ein im Reaktorraum 20 enthaltener Wärmeträger (z.B. erhitzte Luft) oder gar ein aus der Reaktion der über die Einfüllöffnung 3 eingebrachten Feststoffe unter der Einwirkung der Sonnenenergie sich entwickelndes Reaktionsgas nach aussen bringt. Diese Gefahr war ja auch bisher der Grund, warum bei bekannten Reaktoren die Einstrahlöffnung durch eine durchsichtige Trennwand, z.B. ein Quarzglas-Fenster, verschlossen war. Um daher das Austreten von Reaktionsgasen u.dgl. zu verhindern, werden diese Gase vorzugsweise zwangsweise über eine Ableitung 6 abgeführt. Diese Ableitung 6 kann sich zweckmässig im Bodenbereich des Reaktors 2 befinden, sodass allenfalls entstehende Aschen oder sonstige Feststoffreste unter der Einwirkung der Schwerkraft herabfallen und keinerlei besonderen Förderung zu ihrer Abfuhr bedürfen. Allerdings wird noch später erläutert, dass eine Kaminwirkung mit nach oben führender Ableitung 6, besonders bei gasförmigen Reaktionsprodukten, vorteilhaft sein kann. Da die Feststoffe, wie erläutert, unter der Saugwirkung einer mit dem Gebläse 12 verbundenen Saugleitung 6' am Förderband 4 anhaften, können verschiedene Massnahmen zum Entfernen dieser Feststoffreste vorgesehen sein.

Eine Möglichkeit besteht darin, dass am Ende des Förderbandes 4 ein Abstreifer 19, allenfalls auch noch ein zweiter Abstreifer 19' vorgesehen sind; eine weitere Möglichkeit könnte darin gelegen sein, dass die Siebtrommel 10 im Bereiche dieser Abstreifer 19, 19' im Inneren von einer Abdeckplatte derart abgedeckt ist, dass in diesem Bereiche eine Saugwirkung unterbleibt. Dabei können die Abstreifer 19, 19', oder wenigstens einer von ihnen, zusätzlich vorgesehen oder aber auch weggelassen werden. Insoferne durch die Ableitung 6 also auch Feststoffe ausgetragen werden, ist die Anordnung eines Abscheiders 21, wie eines Zyklons, am Ende dieser Leitung 6 zweckmässig. Dadurch, dass der Reaktionsraum 20 unmittelbar mit der Saugseite des Gebläses 12 verbunden ist, ist automatisch gesichert, dass der Gasdruck innerhalb des Reaktorraumes 20 den ausserhalb des Reaktors 2 herrschenden Druck nicht übersteigen kann, sodass es nunmehr keine Rolle mehr spielt, wenn die Öffnung 16 ohne Abschlussfenster ausgebildet ist. Das Gebläse 12 braucht eben dann nur derart bemessen werden, dass es ausreicht, um die Menge des sich unter der Sonnenbestrahlung bildenden Gases ohne Ausbildung eines Ueberdruckes innerhalb des Raumes 20 abgeführt werden kann. Eine optimale Betriebsweise wird sich bei einer Druckdifferenz von 0 ergeben, wobei aus Sicherheitsgründen die Toleranz in den Unterdruckbereich innerhalb des Reaktorraumes 20 zu legen sein wird.

Eine weitere Sicherheitsmassnahme zur Abdichtung der Öffnung 16 bzw. zur Aufrechterhaltung des oben definierten bevorzugten Druckgefälles, welches im Falle einer Druckdifferenz von 0 auch sichert, dass keinerlei Luft über die Öffnung 16 in das Innere des Reaktorraumes 20 strömen kann, wenn dort Reaktionen unter Luftabschluss stattfinden sollen, mag in der Anbringung eines Gasvorhanges vor der Öffnung 16 bestehen. Ein solcher Gasvorhang ist gemäss Fig. 1 sogar in doppelter Ausführung vorhanden, wie man es dann anwenden wird, wenn der Zutritt störender Gase, insbesondere von Luft, von aussen in jedem Falle vermieden werden soll. Bei weniger kritischen Ausführungen hingegen mag ein einziger Gasvorhang ausreichen und gegebenenfalls sogar auf diesen verzichtet werden.

Gemäss Fig. 1 ist im Bereiche der Öffnung 16 eine äussere Gasführungseinrichtung 22 und eine innere Gasführungseinrichtung 23 angebracht. Diese Gasführungseinrichtungen sind vorzugsweise als die Reaktorwand des Reaktors 2 umgebende und parallel zu ihr verlaufende, flache Rohrführung ausgebildet, wobei die Enden dieser Flachrohre 22, 23 jeweils an nicht dargestellte Gasvorratsquellen angeschlossen sind. Es versteht sich also, dass jede dieser Gasvorratsquellen einen Gasvorratsbehälter und/oder ein Gebläse umfassen.

Dabei kann die Anordnung so getroffen sein, dass das Flachrohr 22 mit einem Gebläse für Luft zur Erzeugung eines Luftvorhanges relativ grosser Geschwindigkeit ausgebildet ist, wie dies anhand des Doppelpfeiles A zu ersehen ist. Durch die hohe Geschwindigkeit dieser Luftströmung wird ein Aufweiten der Strömung im Bereiche der auch die Rohre 22, 23 durchsetzenden Öffnung 16 aufgrund der hohen Energie und Laminarität der Strömung vermieden. Es mag vorteilhaft sein, wenn - zumindest abstromseitig - der Rand dieser Öffnung 16 in der Gasführung 22 mit einem Auffangtrichter 22' leicht aufgeweitet ist.

Werden, wie dargestellt, zwei zueinander parallele Gasvorhänge mit den entsprechenden Führungseinrichtungen 22, 23 angeordnet, so kann die innere Gasführung 23 ein Gas mit einer geringeren Geschwindigkeit a hindurchführen, sei es, dass die innere Gasführung 23 mit einem unter Druck stehenden Gasbehälter in Verbindung steht, oder dass sie an ein Gebläse mit nur schwacher Leistung angeschlossen ist. Ein Gasbehälter wird sich in jedem Falle empfehlen, wenn man das Eindringen von Luft in den Reaktorraum 20 unter allen Umständen verhindern will und deshalb der inneren Gasführung 23 ein Inertgas, beispielsweise Stickstoff zuführt. Dabei besitzt die gewählte Anordnung den zusätzlichen Vorteil, dass über die innere Gasführung 23 nur geringe Volumina an (teurem) Inertgas geführt werden müssen. Dieses Inertgas ist dann nach aussen hin durch die schnelle Strömung des Gasvorhanges 22 abgeschlossen, wobei sich etwaige Verluste nur dann ergeben können, wenn im Reaktionsraum 20 allenfalls ein geringer Unterdruck entsteht, durch den das über die Gasführung 23 geführte Inertgas in den Reaktionsraum 20 teilweise eindringt.

Derartige Sicherheitsmassnahmen sind schon deshalb von Vorteil, weil die Sonneneinstrahlung gegebenenfalls nicht gleichmässig zur Verfügung steht und deshalb es möglich ist, dass die Entwicklung von Reaktionsgasen innerhalb des Reaktionsraumes 20 unterschiedliche Gasmengen über die Zeit hervorbringt. Es mag daher ohne weiteres sein, dass die Ableitung 6 wahlweise mit mehreren Abscheidern 21 verbindbar ist, wobei der eine Abscheider bei Vorliegen der vollen Sonneneinstrahlung zum Abscheiden von Aschen betrieben wird, wogegen mindestens ein zweiter Abscheider diejenigen Feststoffpartikeln abscheidet, welche aufgrund unzureichender Sonneneinstrahlung nur einer ungenügenden Reaktion ausgesetzt waren und deshalb der Einfüllöffnung 3 wieder rückgeführt werden. Eine weitere Möglichkeit könnte darin bestehen, dass die Intensität der Sonnenstrahlung - sei es im sichtbaren Bereich - sei es im Infrarotbereich - gemessen und dementsprechend die Fördergeschwindigkeit des Bandförderers 113 verändert wird. Dieser Bandförderer 113 mag mit einer durch den Reaktor 2 hindurch verlaufenden Antriebswelle und einem äusseren Antriebsaggregat verbunden sein.

Bei der Ausführungsform nach Fig. 2 ist ein drehbarer Reaktor 102 vorgesehen, der in nicht dargestellter Weise im Sinne eines Drehpfeiles P zu einer Drehung antreibbar ist, sei es, dass seine Fluidzuleitung 5 gleichzeitig eine Antriebswelle darstellt, sei es, dass die trommelartige Verbreiterung dieses Reaktors 102 mit antreibbaren Laufrollen versehen und in bei Trommeln üblicher Weise antreibbar ist. In jedem Falle ist es vorteilhaft, wenn die drehbare Welle 5 als Zuleitrohr für ein Fluid mit einer an sich bekannten Dreheinführung 24 in Verbindung steht, in der die Welle 5 drehbar gelagert ist und die das der Welle 5 zuzuführende Fluid über eine Leitung 5', beispielsweise von einem Druckgebläse 25 erhält.

Dem in nicht dargestellter Weise drehbar gelagerten Reaktorgefäss 102 liegt ein stationärer Lichteinlassdeckel 26 mit der Öffnung 16 gegenüber. Dieser Lichteinlassdeckel 26 ist an seinem Rande mit einem ringförmigen Sammelkanal 27 versehen, dessen Wandungen einen mit dem Reaktor 102 mitdrehenden Auslassflansch 106 umgeben. Dieser Auslassflansch 106 bildet zusammen mit dem Lichteinlassdeckel 26 eine ringförmige Auslassöffnung aus dem Reaktorgefäss. Es ist zweckmässig, wenn der Kanal 27 gegenüber diesem Auslassschlitz durch eine entsprechende Dichtungsanordnung abgedichtet ist, die im Beispiel der Fig. 2 als Labyrinthdichtung 28 angedeutet ist.

Aufgrund der drehbaren Anordnung des Reaktors 102 wird das durch das Gebläse 25 über die Zufuhrleitung 5 eingeblasene Behandlungsfluid, das beispielsweise ein fluidisierte, zu behandelnde Feststoffpartikel enthaltendes Trägergas umfasst, unter der Wirkung der Fliehkraft gegen die Reaktorausgänge gelegt, von wo es dann über den vom Flansch 106 gebildeten Ringraum in den Sammelkanal 27 und von dort in die Abfuhrleitung 6 gelangt. Wird daher ein relativ weites Strahlenbündel 15 mit dem Brennpunkt nahe der Öffnung 16 angewandt, so ist gesichert, dass das entlang der Reaktorwände strömende Behandlungsgut relativ gleichmässig der Sonnenenergie ausgesetzt wird. Damit erreicht man relativ gleichmässige, jedoch verhältnismässig niedrige Reaktionstemperaturen. Soll dagegen das Behandlungsfluid einer höheren Temperatur ausgesetzt werden, so ist es vorteilhaft, wenn ein Brennpunkt 18' nahe der Ausmündung des Zuleitungsrohres 5 gewählt wird, da in diesem Bereich auch noch eine relativ hohe Konzentration des Behandlungsfluides vorliegen wird. Dabei ergibt sich ein Strahlengang 15'. Zu einer möglichst grossen Anpassungsmöglichkeit eines erfindungsgemässen Reaktors ist es daher vorteilhaft, wenn die in Fig. 1 lediglich schematisch angedeutete Sammeleinrichtung 1 einen verstellbaren Brennpunkt besitzt bzw. "gezoomt" werden kann.

Es wurde bereits anhand der Fig. 1 eine Anordnung beschrieben, die eine Einstellung der Druckdifferenz zwischen der Aussen- und der Innenseite eines Reaktors ermöglicht. Dies kann gemäss Fig. 2 auch mit Hilfe einer Regeleinrichtung 29 erreicht werden, die ein Druckdifferenzsignal erhält. Zu diesem Zwecke ist beispielsweise innerhalb des ringförmigen Sammelkanales 27 ein erster Drucksensor 30 und ausserhalb des Reaktors 102 ein zweiter Drucksensor 31 angeordnet. Der Drucksensor 30 sollte an sich den Reaktorinnendruck bestimmen, wird aber wohl zweckmässig an irgend einer Stelle des stationären Deckels 26 angebracht, wenn auch die dargestellte Nähe zur Ableitung 6 nicht unbedingt die zweckmässigste ist. Eine Anordnung nahe der Öffnung 16 ist zu bevorzugen. Für Fälle, in denen es auf eine genaue Einstellung der Druckdifferenz nicht so sehr ankommt, kann der Aussensensor 31 gegebenenfalls auch entfallen, wenn man davon ausgeht, dass der Aussendruck von 1 Atmosphäre im wesentlichen konstant bleibt.

Es versteht sich ferner, dass auch die Anordnung zweier Gebläse 12 und 25 nicht unbedingt erforderlich sein wird, da unter Umständen bei der Reaktion innerhalb des Reaktorraumes 20 so viel Druck frei wird, dass beispielsweise das Sauggebläse 12 entfallen kann. Im vorliegenden Falle wird es jedoch über einen Motor M1 angetrieben, das Druckgebläse über einen Motor M2, wobei diese beiden Motoren M1, M2 mit Hilfe des Regelkreises 29 über die Drucksensoren 30, 31 derart geregelt werden, dass sich eine Druckdifferenz nahe Null, gegebenenfalls etwas darunter, einstellt. Dies bedeutet, dass die Regelung der beiden Motore M1, M2 im wesentlichen gegensinnig erfolgt, denn sinkt die Druckdifferenz im Reaktorraum 20 unter eine vorgegebene Schwelle bezüglich des Aussendruckes, so braucht das Sauggebläse 12 nur noch weniger Gas abzusaugen bzw. das Druckgebläse 25 muss mehr Gas zuführen. Damit ist klar, dass die Regeleinrichtung 29 wahlweise so beschaffen sein kann, dass sie nur einen der beiden Motore M1 oder M2 regelt oder beide gleichzeitig, gegebenenfalls aber auch abwechselnd und in Stufen.

Die Art der Regelung kann aber auch von der Intensität der Sonnenstrahlung abhängig gemacht werden, denn wenn diese für eine Reaktion nur eines geringen Teiles an zugeführtem Behandlungsfluid ausreicht, so hat es ja keinen Zweck, zum Ausgleich von Druckdifferenzen mehr Behandlungsfluid zuzuführen, vielmehr ist es dann günstig, die Regelung ausschliesslich über den Motor M1 und das Sauggebläse 12 zu betreiben. Es kann daher vorteilhaft sein, wenn im Strahlengang der in die Öffnung 16 einfallenden Sonnenstrahlen eine kleine Spiegelfläche 32 angeordnet ist, die über einen lichtelektrischen Wandler 33 ein Signal an die Regeleinrichtung 29 abgibt. Dieses Signal kann gegebenenfalls über einen Schwellwertschalter 34 geführt werden, dessen Schwellwert zweckmässig einstellbar ist.

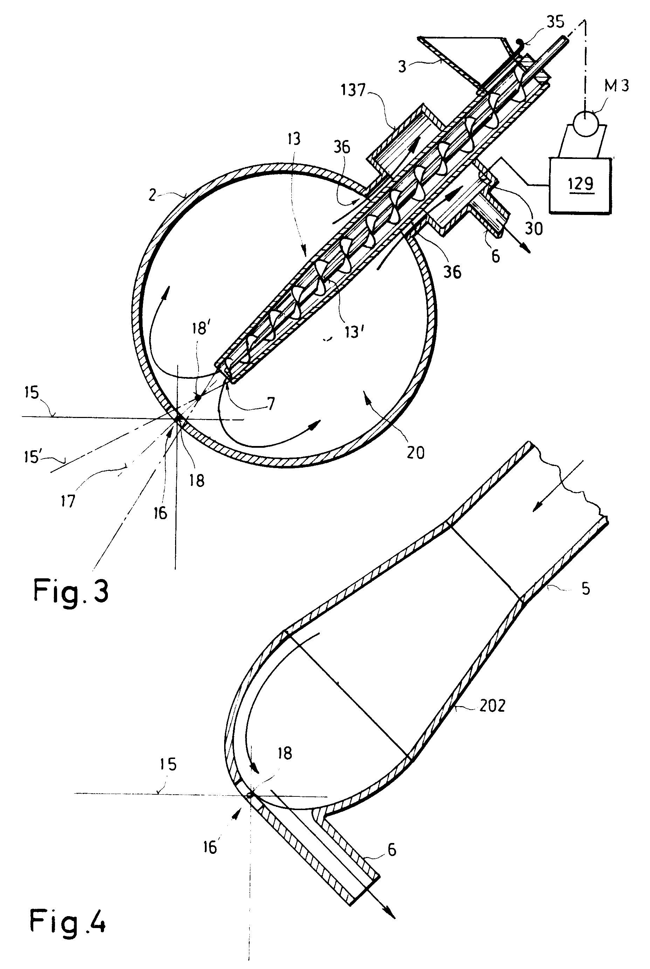

Ähnlich wie bei der Ausführungsform nach Fig. 1 ist auch gemäss Fig. 3 ein als Rotationskörper ausgebildetes Reaktorgefäss 2 vorgesehen. Während aber zur Unterbringung, Lagerung und für den Antrieb des Bandförderers 113 eine Zylinderform des Reaktors 2 nach Fig. 1 günstig ist, ist für die Ausführungsform nach Fig. 3 eine Kugelform des Reaktorgefässes 2 bevorzugt. Der Grund hierfür wird nachstehend noch beschrieben.

Anstelle eines Bandförderers 113 ist bei der Ausführungsform nach Fig. 3 ein Schneckenförderer 13 vorgesehen, der allenfalls axial verschiebbar ist, um unterschiedliche Abstände seiner Mündung von dem jeweiligen Brennpunkt 18 bzw. 18' der Sonnenstrahlen 15 bzw. 15' zu erreichen und damit die Temperatur des aus seiner Mündung austretenden Materiales beeinflussen zu können. Wie dargestellt, kann zusätzlich der Brennpunkt 18 in die Position 18' verschiebbar sein.

Somit wird Feststoffmaterial über einen Einlasstrichter 3 eingegeben, wobei die Zufuhrmenge gewünschtenfalls mit Hilfe eines die Öffnung des Trichters 3 gegen die Schnecke 13' hin einstellenden Schiebers 35 voreinstellbar ist. Das so in den Reaktorraum 20 eingebrachte Gut wird an der Zuführmündung 7 abgegeben und ist dort unmittelbar einer starken Erhitzung durch die Sonnenstrahlen 15 bzw. 15' ausgesetzt. Dabei findet gegebenenfalls eine Reaktion statt, die Gase frei werden lässt. Das zugeführte Gut wird daher von der Mündung 7 weg nach allen Seiten gegen die Wandung des Reaktors 2 geführt und von dort durch dessen rotationssymmetrische Form, insbesondere durch dessen Kugelform in der in der Fig. 3 angedeuteten Weise nach oben abgelenkt, wozu ein an der Ableitung 6 angelegter Unterdruck gegebenenfalls mithilft. Es ist jedoch ohne weiteres möglich, dass die in der gezeigten Weise umgeleiteten Gase durch ihren Eigendruck über seitliche Kanäle 36 in ein Sammelgehäuse 137 dringen würden, doch ist dann auch die Gefahr gegeben, dass solche Reaktionsgase durch die Oeffnung nach aussen gelangen. Um dieser Gefahr zu begegnen, könnte wiederum wenigstens einer der Gasvorhänge 22, 23 (Fig. 1) angewandt werden, wobei es vorteilhaft sein mag, das aus der Ableitung 6 gewonnene Reaktionsgas, wenigstens zum Teil, in die (innere) Strömungsführung 23 einzubringen. Auf diese Weise würde vermieden, dass in dem Reaktionsraum 20 Fremdgas gelangt. Es ist jedoch auch möglich, anstelle eines quer zur Längsachse 17 der Oeffnung 16 verlaufenden Gasvorhanges einem unter einem vorbestimmten Winkel gegen die Oeffnung 16 gerichteten Gasvorhang zu verwenden, wodurch der Aussendruck im Bereiche der Oeffnung 16 beeinflusst bzw. erhöht wird und somit einen erhöhten Innendruck leichter entgegengewirkt wird.

Um diesen Innendruck besser zu beherrschen, kann eine Regeleinrichtung 129 vorgesehen sein, die aufgrund einer Messung des Innendruckes mit Hilfe des Innendrucksensors 30 die Zufuhr an in Gase zu spaltendem Material derart regelt, dass der Innendruck des Reaktors 2 auf einem gewünschten Wert gehalten wird, der ein Austreten der Spaltgase durch die Oeffnung 16 verhindert.

Während im Falle der Fig. 3 eine Kugelform des Reaktors 2 zur Erzielung des geschilderten Umlenkeffektes vorteilhaft ist, zeigt Fig. 4, wie ein solcher Umlenkeffekt auch zum Schutze gegen das Austreten von Gasen aus der Oeffnung 16 eingesetzt werden kann. Hierzu ist ein etwa birnenförmiger Reaktor 202 vorgesehen, dem ein Behandlungsfluid über eine zentrale Zuleitung 5 zuführbar ist. Dies geschieht beispielsweise mit relativ grosser Strömungsgeschwindigkeit, wobei die Birnenform des Reaktors 202 diese Strömungsgeschwindigkeit innerhalb des Reaktorgefässes 202 nicht wesentlich herabsetzt, anderseits aber aufgrund der länglichen Form dieses Reaktors 202 eine genügend lange Zeit zur Verfügung steht, während welcher das Behandlungsfluid der Hitze der Sonnenstrahlen 15 ausgesetzt wird.

Die Anordnung ist nun so getroffen, dass das Behandlungsfluid im Sinne der eingezeichneten Pfeile entlang einer Wand strömt und von dieser noch vor der Oeffnung 16 umgelenkt wird, sodass die Strömung selbst als ein die Oeffnung 16 abdeckender Gasvorhang wirkt. Zur Verbesserung dieses Effektes mag es zweckmässig sein, dass die Zuleitung 5 leicht in Richtung der oberen Wand des Reaktors 202 gerichtet ist, an der die dargestellte Gasumlenkung erfolgen soll. Ferner mag es vorteilhaft sein, wenn die Ableitung 6 als relativ flaches, jedoch über die gesamte Breite des Reaktors 202 reichendes Rohr ausgebildet ist (Fig. 4 zeigt die Ableitung 6 von ihrer schmalen Seite her), damit das umgelenkte und an der Oeffnung 16 vorbeigeführte Gas ohne Verwirbelung unmittelbar in die Leitung 6 und dann an den jeweils gewünschten Ort gelangen kann. Je nach den Gegebenheiten mag dabei die Anordnung eines Saug- und/oder Druckgebläses vorteilhaft sein. Gegebenenfalls ist aber auch eine Kreislaufführung in dem Sinne denkbar, dass ein Teil der über die Ableitung 6 abgeführten Gase einerseits zur direkten Aufheizung des über die Zuleitung 5 zugeführten Gases, anderseits aber auch (falls nötig) zur wiederholten Durchführung durch die Reaktionszone des Reaktors 202 über die Zuleitung 5 rückgeführt werden.

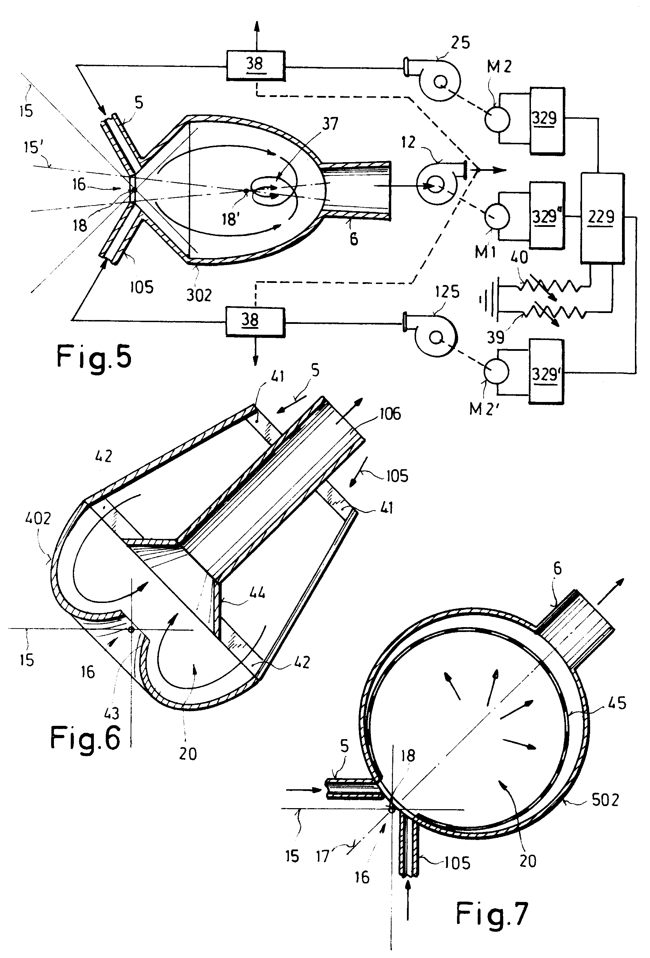

Eine vorteilhafte Wirkung zur Entlastung der freien Einstrahlöffnung 16 wird auch bei einer Ausführungsform nach Fig. 5 erzielt. Hier werden einem etwa birnenförmigen Reaktor 302 zwei Behandlungsfluide über gesonderte Zuleitungen 5, 105 zugeführt. Dabei sind die Zuleitungen 5, 105 derart angeordnet, dass sie einen an der freien Oeffnung 16 vorbeiströmenden Gasvorhang bilden, im Inneren des birnenförmigen Reaktors 302 an dessen Wänden umgelenkt werden und schliesslich unter Bildung einer Wirbelzone 37 relativ lange der Einwirkung der Sonnenstrahlung ausgesetzt werden. Dabei mag es vorteilhaft sein, den Brennpunkt 18' in den Bereich dieser Wirbelzone 37 zu rücken, falls es erwünscht ist, dort eine höhere Temperatur durch Konzentration der Sonnenstrahlen 15' zu erreichen. Das durch die Zusammenführung der über die Zuleitungen 5, 105 zugeführten und durch Druckgebläse 25, 125 eingeblasenen Gase entstandene heisse Synthesegas wird dann über die Ableitung 6 mit Hilfe eines Sauggebläses 12 (falls erforderlich) abgezogen.

Um relativ rasch auf die erforderliche Reaktionstemperatur zu kommen, mag es zweckmässig sein, in den Zuleitungen 5, 105 Aufheizeinrichtungen 38 vorzusehen. Da anderseits das über die Ableitung 6 abgezogene Synthesegas im allgemeinen sowieso einer Kühlung bedarf, bietet es sich an, die Vorheizeinrichtungen 38 als Wärmetauscher in der Weise auszubilden, dass ein Teil des abgezogenen Synthesegases diesen Wärmetauschern 38 zur Vorheizung zugeführt wird, und es kann nötigenfalls auch das gesamte anfallende Synthesegas auf diese Weise gekühlt werden.

Gerade für Synthesen ist die Einhaltung stöchiometrischer Bedingungen innerhalb des Reaktors 302 von Bedeutung. Wenn daher die Gebläse 25, 125 von Motoren M2, M2' angetrieben werden, deren Drehzahl die Zufuhrmenge der Reaktiongase bestimmt, so kann zur Einstellung der Menge dieser Gase jeweils ein Einsteller 39 bzw. 40 vorgesehen sein, wovon der eine Einsteller 39 dem Motors M2, der Einsteller 40 dem Motor M2' zugeordnet ist. Mit Hilfe dieser Verstellmöglichkeit wird eine Steuerstufe 229 angewählt, die beispielsweise von einem Mikroprozessor gebildet ist. Ueber diese Steuerstufe 229 werden dann Motorsteuerstufen 329, 329' bzw. allenfalls auch 329'' für den Motor M1 des Sauggebläses 12 gesteuert. Selbstverständlich ist es möglich, den Mikroprozessor 229 zusätzlich mit jenen Aufgaben zu betrauen, die anhand der Fig. 2 und der Regelstufe 29 beschrieben wurden.

Einen birnenförmigen Reaktor 402 zeigt auch die Fig. 6. Während aber im Ausführungsbeispiel nach Fig. 2 die Zuleitung über die Schnecke 13 aus der Mitte her erfolgt, ist hier ein mittiges, bis in den Reaktorraum des Reaktors 402 reichendes Ableitungsrohr 106 vorgesehen. Dagegen laufen in beinahe antiparalleler Richtung zum Ableitungsrohr 106 zwei oder mehr um das Ableitungsrohr 106 angeordnete Zuleitungen, 5, 105 in Richtung zum Reaktorraum 20, wobei anstelle mehrerer Zuleitungen auch eine einzige ringförmig die Ableitung 106 umgebende Zuleitung vorgesehen sein kann. Das Ableitungsrohr 106 ist innerhalb des Reaktors 402 beispielsweise durch radiale Stege 41, 42 gehalten. Gewünschtenfalls können diese Stege 41, 42 oder wenigstens die dem Reaktorraum 20 näher gelegenen Stege 42 zur Ausbildung einer Drallströmung schraubenartig gebunden sein. Dies begünstigt die Vermischung der zugeführten Gase bzw. verlängert deren Verweilzeit im Reaktorraum 20 und damit die Einwirkungszeit der Sonnenstrahlen 15.

Um diese freie Einstrahlöffnung 16 gegen das Austreten von Gasen zu schützen, ist die Oeffnung 16 in der aus Fig. 6 ersichtlichen Weise vorzugsweise von Umlenk-Wandabschnitten 43 umgeben. Diese Umlenkflächen 43 bewirken einerseits einen Schutz der Öffnung 16 vor dem auf sie zuströmenden Reaktionsgas, anderseits bewirkt die gegen einen Einlasstrichter 44 des Ableitrohres 106 umgelenkte Gasströmung einen Sogeffekt, der die erwünschte Druckdifferenz zwischen dem Reaktorraum 20 und der Aussenseite des Reaktors 402 sichert oder mindestens unterstützt. Nötigenfalls können - entsprechend der Ausführung gemäss Fig. 5 - Saug- und/oder Druckgebläse 12 bzw. 25, 125 vorgesehen werden.

Eine strömungstechnisch der Fig. 5 ähnliche Ausgestaltung zeigt die Fig. 7. Auch hier werden Behandlungsfluide über Zuleitungen 5, 105 nahe der Öffnung 16 in einen Reaktor 502 eingebracht, wobei die Zuleitungen 5, 105 zur Achse 17 unter einem relativ steilen Winkel von mindestens 45° stehen, was eine leichte Sogwirkung im Bereiche der Öffnung 16 ergibt. Diese Sogwirkung mag durch einen bei der Reaktion im Reaktorraum 20 entstehenden Innendruck an Null herangeführt werden.

Innerhalb des Reaktors 502 ist ein, lediglich schematisch angedeutetes Sieb 45 vorgesehen. Dieses Sieb 7 kann verschiedenen Zwecken dienen. Zum einen kann es beispielsweise als Lochsieb, d.h. als mit Perforationen versehene Blechplatte ausgebildet sein und dazu dienen, die Verweilzeit von über die Zuleitungen 5, 105 eingebrachten Gase innerhalb des Reaktorraumes 20 zu verlängern. Das Sieb 45 wirkt dann also gewissermassen als Diffusorplatte, wobei anstelle des Siebes 45 (oder zusätzlich dazu) auch weitere Diffusorplatten vorgesehen und beispielsweise vor den Einmündungen der Zuleitungen 5, 105 vorgesehen sein können, was dann zu einer Verwirbelung der Gase im Reaktorraum 20 führt. Eine den Reaktorraum 20 aber im wesentlichen abschliessende Diffusorplatte 45 ist jedoch bevorzugt.

Falls Feststoffe mit einem der Fluide in den Reaktor 502 eingebracht werden sollen, so ist es zweckmässig, wenn die Lochgrösse des Siebes 45 derart bemessen ist, dass ein Selbstreinigungseffekt entsteht und die eingebrachten Partikel über die Sieblöcher leicht wieder nach aussen bzw. in die Ableitung 6 gelangen. Schliesslich wäre es aber auch nicht unmöglich, den Reaktor 502 chargenweise zu betreiben, wobei das Sieb 45 derart ausgebildet ist, dass seine Sieblöcher kleineren Querschnitt besitzen, als die eingebrachten Feststoffpartikel. Diese letzteren werden dann an der Sieboberfläche verteilt (oder als grobe Schüttung im gesamten Sieb 45 untergebracht) und innerhalb des Reaktors 502 den über die Zuleitungen 5, 105 eingebrachten Gasen bei gleichzeitiger Erhitzung mit Hilfe der Sonnenstrahlen 15 ausgesetzt, bis sie zur gänze umgesetzt wurden. Solang wird das Sieb 45 aus dem, beispielsweise zylinderförmigen Reaktor 502 wieder entfernt, sei es, dass der Reaktor einen aufklappbaren Mantelwandabschnitt besitzt oder eine abnehmbare Stirnwand.

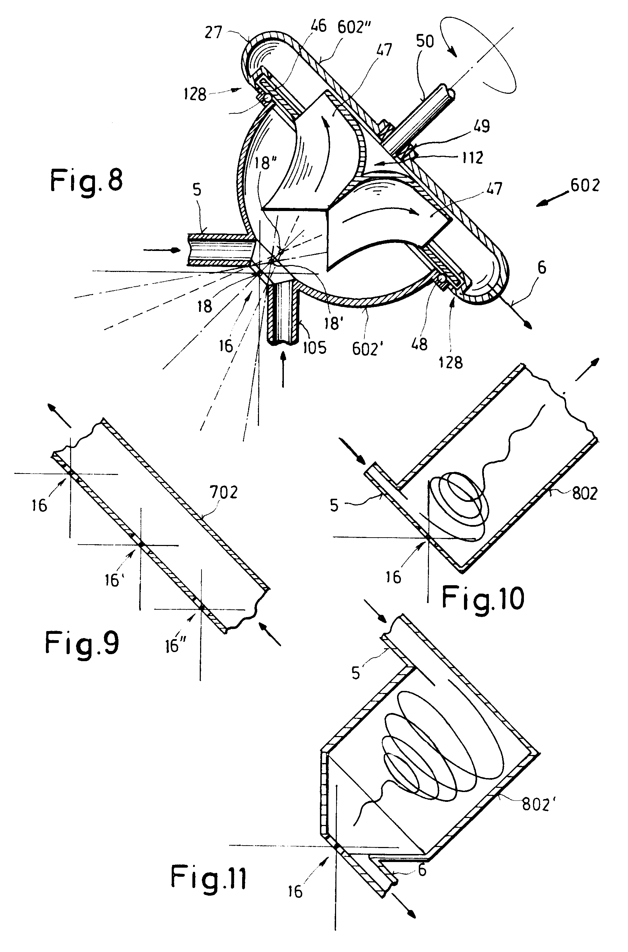

Eine ähnliche Anordnung der Zuleitungen 5, 105 zeigt die Fig. 8, wobei allerdings ein Sauggebläse 112 in den Reaktor 602 integriert ist. Zu diesem Zwecke weist der Reaktor 602 ein ortsfestes Reaktorgehäuse 602' und ein Auslaufgehäuse 602'' auf, die gegebenenfalls miteinander verbunden sein können. Das Auslaufgehäuse 602'' umfasst einen ringförmigen Sammelkanal 27, der mit der - lediglich schematisch angedeuteten - Ableitung 6 verbunden ist. Mit dem Auslaufgehäuse 602'' kann auch eine Tellerplatte 46 ortsfest verbunden sein, welche dann von den Flügeln 47 des Sauggebläses 112 getrennt wäre und diese Flügel 47 ringförmig umgäbe. Im vorliegenden Falle ist die Tellerplatte 46 jedoch Bestandteil des Sauggebläses 112 und dient dessen Lagerung im Inneren des Reaktors 602 mit Hilfe von Wälzlagern 48. Wie schon im Ausführungsbeispiel nach Fig. 2 ist wiederum eine Dichtungsanordnung 128 zwischen dem jeweiligen stationären und dem drehbaren Teil vorgesehen, die auch hier wiederum als Labyrinthdichtung ausgebildet ist. Eine solche Abdichtung wird jedoch entbehrlich, wenn die Platte 46 als mit den Gehäuseteilen 602', 602'' verbundener Teil die drehbaren Flügel 47 im Inneren des Reaktors 602 umgibt. Im übrigen versteht es sich, dass das hier nur schematisch angedeutete Lager 49 für die Welle 50 des Sauggebläses 112 eine entsprechende Abdichtung an sich bekannter Art besitzen soll.

Da die Gebläseschaufeln 47 - je nach Ausbildung - gegebenenfalls im Mittelbereich die Wirbelbildung der über die Zuleitungen 5, 105 eingebrachten Gase unterstützt und eine solche Wirbelbildung bereits durch die Zuordnung der Zuleitungen 5, 105, besonders bei geringen Strömungsgeschwindigkeiten, in diesem Mittelbereich ermöglicht wird, ist es besonders vorteilhaft, wenn die optische Sammeleinrichtung zur Einstellung der Temperatur auf verschiedene Brennpunktpositionen 18, 18' und 18'' umstellbar ist.

Anhand der Fig. 9 soll gezeigt werden, dass bei entsprechender Einstellung der Druckdifferenz, d.h. der Zuführung der Abführung eines Fluides, auch verhältnismässig einfache und der Fördertechnik entnommene Reaktorbauweisen möglich sind. Dabei ist es bei einem rohrförmigen Reaktor 702 gemäss Fig. 9 zur Vergrösserung der eingebrachten Wärmemenge bzw. zur Verlängerung der Verweilzeit innerhalb des erhitzten Bereiches besonders leicht möglich, auch mehrere freie Einstrahlöffnungen 16, 16', 16'' anzuordnen, doch sind mehrere Oeffnungen auch bei den übrigen Reaktorformen denkbar.

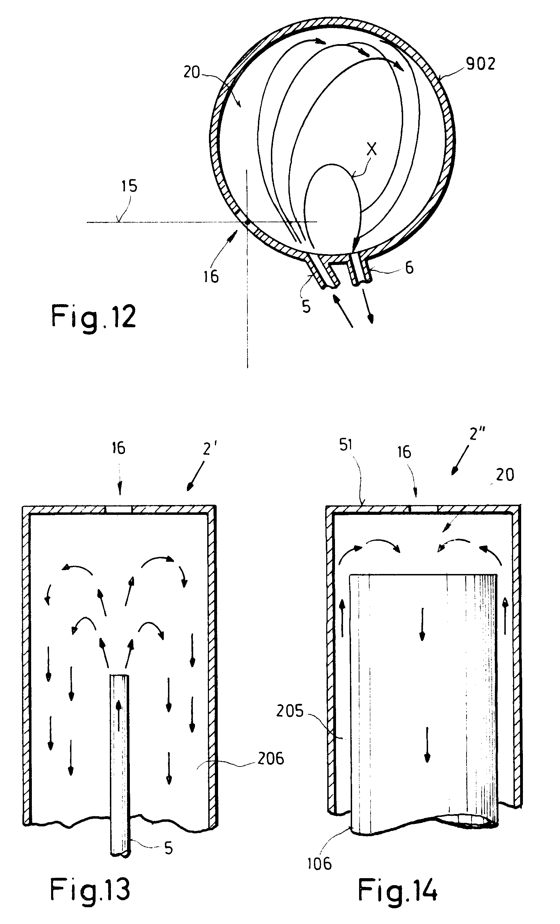

Die Fig. 10 und 11 veranschaulichen anhand von zyklonartigen Reaktoren 802, 802' mit tangentialer Zuleitung 5, dass auch solche bekannte Apparate im Sinne der Erfindung mit einer freien Oeffnung ausgebildet werden können, soferne nur die Druckverhältnisse in der oben beschriebenen Weise unter Kontrolle gehalten werden. Hier sei erwähnt, dass sich im Falle der Verwendung eines zyklonartigen Reaktors 802 bzw. 802' mit einer freien Öffnung 16 entweder im Bereiche der Zuleitung 5 (Fig. 10) oder im Bereiche der Ableitung 6 (Fig. 11) jeweils Wirbelströmungen ergeben, die eine relativ lange Verweilzeit des jeweiligen Fluides (gegebenenfalls samt darin eingebrachter Feststoffpartikel) sichert, dass sich aber derartige Reaktoren 802, 802' bei manchen Produkten eher für geringere Temperaturen eignen, wenn bei diesen die Gefahr besteht, dass - im Falle von Feststoffpartikeln - diese durch die Wirbelströmung gegen die erhitzten Wände getrieben werden und dort anbacken könnten. Diese Wände werden ja in aller Regel zur Aufrechterhaltung der gewünschten Temperatur wärmeisoliert sein - ganz ähnlich, wie übrigens auch die Zu- und die Ableitungen besonders wie im Falle der Fig. 5, bei der ein Vorheizen stattfindet, zweckmässig isoliert werden. Von den in Fig. 10 und 11 dargestellten Ausführungsformen eignet sich die Ausbildung nach Fig. 11 deswegen besonders für die Behandlung von Feststoffpartikeln, weil hier ein einfaches Austragen dieser Partikel durch Schwerkraft über die am Fussende des Reaktors 802' gelegene Ableitung 6 möglich ist.

Bei der Beschreibung des birnenförmigen Reaktors 302 gemäss Fig. 5 wurde die für eine ausreichende Verweilzeit günstige Wirbelbildung in der Wirbelzone 37 hervorgehoben. Eine solche Wirbelbildung kann aber auch mit einem rotationssymmetrischen Reaktor 902 gemäss Fig. 12 erreicht werden. Es ist ersichtlich, dass dabei die Zuleitung 5 vorzugsweise etwa tangential zur freien Oeffnung 16 angeordnet wird, um dort im Reaktorraum 20 eine an der freien Oeffnung 16 vorbeistreichende und so abdichtende Gasvorhangströmung zu schaffen. Diese Strömung wird dann an den rotationssymmetrischen Wänden des Reaktors 902 umgelenkt und dann der Ableitung 6 zugeführt. Diese Ableitung 6 kann der zugeführten Strömung allenfalls ebenfalls etwa tangential entgegengerichtet sein, wodurch auch die Gefahr eines "Kurzschlusses" (vgl. den Pfeil X) eher vermieden wird, da dann die beiden Leitungen 5, 6 gegen das Reaktorinnere 20 stärker divergieren. Die Gefahr eines Kurzschlusses entsprechend dem Strömungspfeil X wird sich vor allem dann ergeben, wenn die Strömungsgeschwindigkeiten gering sind bzw. der, z.B. durch ein an die Ableitung 6 angeschlossenes Sauggebläse 12 (vgl. Fig. 5) geschaffene Unterdruck innerhalb des Reaktorraumes 20 zu hoch wird. Daher wird bei der Ausbildung der Zu- und der Ableitungen 5, 6 nebeneinander die Einhaltung der oben geschilderten Druckdifferenzbedingungen durch die erläuterten Massnahmen von besonderer Bedeutung sein.

Die Fig. 13 und 14 veranschaulichen zwei einander ähnliche, an sich bevorzugte, Ausbildungen von Reaktoren 2', 2'', die sich durch eine zentralsymmetrische Anordnung der Zuleitungen 5 bzw. 205 und der Ableitungen 106 bzw. 206 auszeichnen. Der jeweilige Reaktor 2' bzw. 2'' ist hier im Axialschnitt im wesentlichen rechteckig gezeigt, doch veranschaulicht besonders ein Vergleich mit Fig. 6, dass bei einer zentralsymmetrischen Ausbildung die Anordnung von Umlenkwandabschnitten 43 rund um die freie Öffnung 16 vorteilhaft ist, wobei auch der Umfangsteil der Wandungen der Reaktoren 2', 2'' zweckmässig in der Art der Fig. 6 gewölbt ist, um die anhand der Strömungspfeile in Fig. 13 und 14 gezeigte Gasumlenkung zu begünstigen.

Im Falle der Fig. 13 ist innerhalb des Reaktors 2' ein zentrales, insbesondere düsenartig oder als Diffusor ausgebildetes Zuleitungsrohr 5 in einem derartigen Abstand von der freien Öffnung 16 angeordnet, dass das der Öffnung 16 entgegengerichtete Fluid nicht durch die Öffnung nach aussen dringen kann, was im allgemeinen zusätzliche, in Fig. 13 nicht gezeigte Massnahmen erfordern wird, um die oben beschriebene Druckdifferenz nahe Null aufrecht zu erhalten. Diese Massnahmen können in einer entsprechend starken Absaugung über die Ableitung 206 und/oder einer geringen über die Leitung 5 zugeführten Fluidmenge bestehen, allenfalls aber auch zusätzlich oder alternativ in der Anordnung eines Gasvorhanges, etwa jener Art, wie sie in Fig. 1 dargestellt ist.

Diesbezüglich ist eine Ausführungsform gemäss Fig. 14 weniger empfindlich, weil die radial äussere Zuleitung 205 zwar gegen die die Öffnung 16 tragende Kopfwand 51 gerichtet ist, nicht aber unmittelbar gegen die Öffnung 16 selbst, sodass gegebenenfalls, vor allem bei entsprechender Absaugung über das zentrale Ableitungsrohr 106, eher eine Sogwirkung im Bereiche der Öffnung 16 ausgeübt wird. Dies mag dazu führen, dass der Druck im übrigen Reaktorraum 20 höher als der Aussendruck sein kann und nur im Bereiche der Öffnung 16 ein Unterdruck nahe Null herrscht. Während im Falle der Fig. 13 - ähnlich der Ausführungsform nach Fig. 3 - der Brennpunkt bzw. die Erhitzungszone der Sonnenstrahlen im allgemeinen in den Mündungsbereich des Zuleitungsrohres 5 bzw. in den Bereich vor der Umlenkung der gezeigten Fluidströmung gebracht werden wird, ergibt sich im Falle der Fig. 14 durch die von allen Seiten her zum Ableitungsrohr 106 führenden Strömungswege, gegebenenfalls vor der Einmündung des Ableitungsrohres 106 eine Wirbelzone, in welche die Wärmestrahlung durch die offene Einstrahlöffnung 16 hindurchgerichtet wird. Durch Verändern des Soges lässt sich daher - neben der Möglichkeit der Veränderung des Brennpunktes - die Relativlage des Wirbels zum Brennpunkt verändern.

Während Fig. 14 eine ringförmige Zuleitung 205 veranschaulicht, versteht es sich, dass es ebenso möglich wäre, mehrere Zuleitungsrohre rund um das zentrale Ableitungsrohr 106 anzuordnen, was insbesondere dann von Vorteil sein wird, wenn der Reaktor 2'' vielseitig genug einsetzbar sein soll, um wahlweise auch mehrere verschiedene Fluide dem Reaktorraum 20 des Reaktors 2'' zuzuführen, d.h. dass dann jedes der Zuleitungsrohre gewünschtenfalls ein anderes Fluid, sei es eine mit Feststoffen beladene Gasströmung oder ein Gas selbst, eingebracht werden kann. Dabei ist es denkbar, dass die Zuleitungsrohre einen von der Kreisform abweichenden Querschnitt besitzen, etwa als Kreisringsegmente das zentrale Ableitungsrohr 106 umstehen. Hier sei nochmals erwähnt, dass alle jene Einrichtungen auch bei den Ausführungsformen nach den Fig. 13 und 14 vorgesehen sein können, die bereits anhand der Fig. 6 als vorteilhaft herausgestellt worden sind. Dabei ist als weiterer Vorteil einer Anordnung nach Fig. 14 (oder Fig. 6) anzusehen, dass derjenige Bereich, in dem Zuleitung 5 und Ableitung 106 parallel zueinander geführt sind, als Wärmetauscher wirkt, da über die Trennwand Wärme der Ableitung 106 zur Aufheizung des zugeführten Materiales bzw. Fluides der Zuleitung 5 zugeführt wird.

Während die Anordnungen nach Fig. 13 und 14 einen Reaktor 2' bzw. 2'' mit nach oben gekehrter Öffnung 16 zeigen, hat es sich herausgestellt, dass eine Anordnung zu bevorzugen ist, bei der die Ableitung 6 bzw. 106 kaminartig nach oben führt, so dass ihr Eintrittsende nach unten gekehrt ist, ihr Austrittsende nach oben. Auf diese Weise kann sich der erwünschte leichte Unterdruck einfach dadurch entwickeln, dass sich eine Kaminwirkung einstellt, wie sie übrigens auch schon bei der Anordnung nach Fig. 6 eintreten wird und gegebenenfalls weitere Massnahmen zur Aufrechterhaltung des erwähnten Druckgefälles überflüssig macht.

Ein besonderer Vorteil der erfindungsgemässen Anordnung liegt nicht zuletzt darin, dass aufgrund des geringen Druckunterschiedes zwischen der Aussen- und der Innenseite des jeweiligen Reaktors derselbe mit verhältnismässig dünnen Wandstärken ausgebildet sein kann, wobei die rotationssymmetrische bevorzugte Ausführung eines solchen Reaktors nicht nur die Strömungsführung, sondern auch die Festigkeit des Reaktors selbst begünstigt. Natürlich ist es gewünschtenfalls auch möglich, dann mit höheren Unterdrücken zu arbeiten, wenn entweder die ablaufende Reaktion gegenüber einströmender Aussenluft unempfindlich ist, oder durch eine Gasströmungsführung 23 (Fig. 1) mit Inertgas die Zufuhr von Luft unterbunden wird. Zwar wird ein gelegentlich auftretender, schwacher Ueberdruck im Inneren des Reaktors meist nur dazu führen, dass ein geringer Anteil des darin enthaltenen Gases über die Oeffnung 16 nach aussen strömt, doch ist dies aus Umweltschonungsgründen einerseits und aus Oekonomiegründen andererseits selbstverständlich nicht erwünscht. Daher wird das Arbeiten im Bereiche einer Druckdifferenz von Null, jedoch mit einem im Unterdruckbereich gelegenen Toleranzband bevorzugt sein.

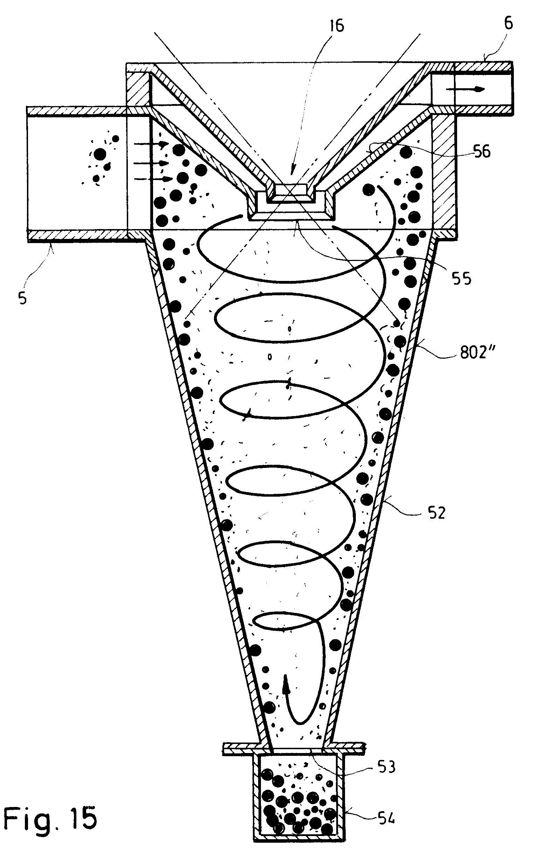

Als besondere Variante zu den Fig. 10 und 11 zeigt die Fig. 15 einen Reaktor 802'' mit einer zumindest abschnittsweise konischen Reaktorberandung 52, deren Radius nach unten abnimmt. Es handelt sich um einen zyklonartigen Reaktor 802'' mit mindestens einer im oberen Bereich des Reaktors angeordneten tangentialen Zuleitung 5 und mindestens einer obenliegenden vorzugsweise senkrecht zur Reaktorachse angeordneten Einstrahlöffnung 16. Ein durch die Zuleitung 5 eingetragenes Gas-Teilchen-Gemisch bewegt sich in einer äusseren Wirbelströmung bzw. einem Vortex nach unten und das Gas und gegebenenfalls ein Feinanteil der Teilchen strömen in einer inneren Wirbelströmung bzw. einem Vortex nach oben, wo sie im Bereich der Einstrahlöffnung 16 in einen Austrittsraum 56 eintreten und einer Ableitung 6 zugeführt werden.

Ein derartiger Reaktor 802'' kann beispielsweise beim Kalkbrennen Verwendung finden. Die dabei ablaufende Reaktion führt Calciumcarbonat ($CaCO_3$) in Calziumoxid (CaO) und Kohlendioxid ($CO_2$) über und wird herkömmlicherweise in um eine nahezu horizontale Achse rotierenden Drehöfen bei Temperaturen zwischen 900°C und 1300°C produktiv eingesetzt. Um im erfindungsgemässen Reaktor 802'' einen vollständigen Reaktionsablauf zu erreichen, muss das Calciumcarbonat während einer genügend langen Zeit auf einer Temperatur über 900°C verweilen. Diese Verweilzeit wird durch die Wirbelströmung des Gemisches aus Gas und Calciumcarbonat-Teilchen gewährleistet. Die Wirbelströmung wird geprägt durch die Einspeisung, die Ablenkung an der Reaktorberandung 52 und die durch die Schwerkraft bedingte Ablenkung der Teilchen nach unten. Eine nach unten sich konisch verjüngende Reaktorberandung 52 verlangsamt das Absinken der Teilchen und erhöht somit die Verweilzeit.

Während die Teilchen entlang der Reaktorberandung 52 rotierend nach unten strömen, werden sie von der durch die Einstrahlöffnung 16 eintretenden Strahlung auf die nötige Temperatur erhitzt. Das dabei entstehende Calziumoxid gelangt durch eine erste am unteren Reaktorende angeordnete Austrittsöffnung 53 in einen vorzugsweise auswechselbaren Produktbehälter 54. Gegebenenfalls ist am Produktbehälter 54 eine Schleuse und/oder eine Austragevorrichtung wie beispielsweise eine Zellenradschleuse vorgesehen. Das Gas und gegebenenfalls ein möglicher Feinanteil von Calciumcarbonat und gegebenenfalls von Calciumoxid wird in einem inneren Vortex nach oben gegen eine zweite im Bereich der Einstrahlöffnung 16 angeordnete Austrittsöffnung 55 bewegt. Mittels der nötigen Druckvorgaben wird gewährleistet, dass das durch die zweite Austrittsöffnung 55 tretende Gas und gegebenenfalls Teilchenmaterial nicht durch die Einstrahlöffnung 16, sondern durch den seitlich daran anschliessenden Austrittsraum 56 zu mindesten einer Ableitung 6 gelangt. Feinteilchen die durch die zweite Austrittsöffnung 55 austreten, haben sich während einer langen Zeit im Reaktor aufgehalten und waren auch der in der Nähe des Brennpunktes äusserst hohen Energiedichte und somit einer hohen Temperatur ausgesetzt, sodass aufgrund eines vollständigen Reaktionsablaufes lediglich Calciumoxid und Gas durch die Ableitung 6 austritt.

Die Ableitung 6 übernimmt vorzugsweise eine Saugfunktion und unterstützt somit den inneren aufsteigenden Vortex. Um eine gewünschte Vortexbildung zu gewährleisten, kann an einer oder mehreren Stellen des Reaktors Gas zugeführt werden. Vorzugsweise wird durch die Öffnung 53, gegebenenfalls lediglich durch deren zentralen Bereich Gas in den Reaktor eingetragen um den inneren aufsteigenden Vortex zu verstärken.

Anhand der Fig. 1 bis 15 wurden beispielshalber verschiedene Einrichtungen gezeigt, die durch Abdichtung bzw. Aufrechterhaltung einer vorbestimmten Druckdifferenz das Freihalten der Oeffnung 16 von durchsichtigen Trennwänden ermöglicht. Dadurch wird ja auch - infolge des Wegfalles von Blenden- bzw. Brechungseffekten die geschilderte Relativeinstellung von Brennpunkt und Materialwolke bzw. Wirbelzone besonders sinnvoll. Anderseits sind anhand dieser Figuren auch Merkmale geschildert worden, die mit den Merkmalen des Anspruches 1 nicht in unmittelbarem Zusammenhang stehen und mit diesen zusammen zwar besonders vorteilhaft sind, aber auch von selbstständiger Bedeutung sein mögen, wie etwa die Anordnung mehrerer Abscheider 21 mit selektiver Rückführung von Material in den Reaktor (Fig. 1) oder jene Anordnungen, die einen von der Öffnung 16 wegweisenden Saugeffekt zufolge haben, der bei Anordnung eines Glasfensters dort eher zur Reinhaltung desselben führt. In diese Gruppe gehören auch diejenigen Ausbildungen, die innerhalb des Reaktorraumes einen Gasvorhang vor der Öffnung 16 schaffen, beispielsweise auch, wie dies an Hand der Umlenkwandung 43 in Fig. 6 beschrieben wurde.

Anderseits versteht sich aus der obigen Beschreibung, dass zahllose Varianten, z.B. durch Kombination einzelner Merkmale von Ausführungsformen mit denen anderer Ausführungsbeispiele, möglich sind; beispielsweise kann im Falle der Fig. 5 ein Gasanalysegerät an die Ableitung 6 angeschlossen sein, um entsprechend einer durchgeführten Analyse, wie etwa einer Spektralanalyse, die Einstellung der Regler 39 und 40 automatisch vorzunehmen. Dies kann beispielsweise, besonders für Feststoffe, auch mit einem Polarisations-Interferometer geschehen, wie es etwa in der WO 90/10191 beschrieben ist, insbesondere wenn es um die Regelung stöchiometrischer Zufuhrmengen geht.

**Patentansprüche**

1.  Reaktor mit einem Reaktorraum und zumindest einer Öffnung (16) für den Eintritt von Sonnenstrahlen, die über eine Sammeleinrichtung (1) dem Reaktorraum (20) zuleitbar sind und ein zu behandelndes Material beaufschlagen, sowie mit zumindest einer Ableitung (6) für ein Fluid, dadurch gekennzeichnet, dass die Öffnung (16), ohne Trennwand gegenüber der Aussenseite, unmittelbar mit dem Reaktorraum (20) in Verbindung steht, und dass eine Anordnung zum Aufrechterhalten einer maximal Null betragenden Druckdifferenz zwischen dem Druck wenigstens im Bereiche der Öffnung (16) innerhalb und ausserhalb des Reaktorraumes (20) vorgesehen ist.

2.  Reaktor nach Anspruch 1, dadurch gekennzeichnet, dass der Reaktor (2;2';2'';102-902) im Querschnitt rund, insbesondere rotationssymmetrisch, ausgebildet ist.

3.  Reaktor nach Anspruch 1 oder 2, dadurch gekennzeichnet, dass die Zuleitung (5) wenigstens eines der folgenden Merkmale aufweist:
    a) sie besitzt eine der Seite der Öffnung (16) entgegengerichtete Mündung (Fig. 2-4, 13);
    b) sie ist als den Reaktorraum (20) durchquerendes Rohr (13; 5)ausgebildet, insbesondere mit parallel zur Längsachse verlaufender Richtung (Fig. 3, 13);
    c) sie umfasst eine zentralsymmetrische Zuleitungsanordnung (5, 105), insbesondere mit einem koaxial zu einer Längsachse des Reaktorraumes (20) gelegenen Zuleitungsrohr (5) (Fig. 2-8, 13, 14);
    d) sie umfasst wenigstens zwei Zuleitungsrohre (5, 105), die eine Längsachse des Reaktorraumes (20), insbesondere in gleichmässigen Winkelabständen, umgeben (Fig. 5, 7, 8).

4.  Reaktor nach einem der Ansprüche 1 bis 3, dadurch gekennzeichnet, dass die Sonnenstrahlen in den Reaktor (2) unter Bildung eines Winkels untereinander einstrahlbar sind, wobei vorzugsweise der Brennpunkt (18; 18'; 18'') der Strahlen im Bereich zwischen der Mündung der Zuleitung (5) und der Öffnung (16) liegt, gegebenenfalls in diesem Bereiche einstellbar ist.

5.  Reaktor nach einem der Ansprüche 1 bis 4, dadurch gekennzeichnet, dass die Ableitung (6, 106) wenigstens eines der folgenden Merkmale aufweist:
    a) sie (6) ist an der der Mündung der Zuleitung (14, 5, 105) gegenüberliegenden Seite der im Reaktorraum (20) erzeugten Strömung vorgesehen (Fig. 1-5, 7-11, 13; 15);
    b) sie ist in den Reaktor (2) rückgeführt;
    c) sie ist kaminartig nach oben geführt.

6.  Reaktor nach einem der Ansprüche 1 bis 5, dadurch gekennzeichnet, dass der Reaktor (2) thermisch isoliert ausgebildet ist.

7.  Reaktor nach einem der Ansprüche 1 bis 6, dadurch gekennzeichnet, dass die Ableitung (6) und/oder Zuleitung (5) wenigstens eines der folgenden Merkmale aufweist:
    a) zumindest eine Eintrittsmündung und/oder zumindest eine Austrittsöffnung der/des Fluides ist im Kopfbereich, insbesondere im Kopf, des Reaktors (2) vorgesehen (Fig. 3, 6, 7, 9, 10);
b) sie ist thermisch isoliert ausgebildet.

8. Reaktor nach einem der Ansprüche 1 bis 7, dadurch gekennzeichnet, dass die Anordnung zum Aufrechterhalten einer maximal Null betragenden Druckdifferenz folgende Merkmale besitzt:
a) vor der Öffnung (16) ist mindestens eine Zuführung (22 bzw. 23) für ein quer zur Achse der Öffnung strömendes Gas vorgesehen, gegebenenfalls zwei zueinander parallel verlaufende Zuführungen (22, 23);
b) es ist mindestens ein Drucksensor mit dem Reaktorraum verbunden, insbesondere im Bereiche der Öffnung (16) angeordnet, über den eine Steuer- bzw. Regeleinrichtung für den Druck im Reaktorraum ansteuerbar ist;
c) die Ableitung (6; 106) ist kaminartig nach oben geführt;
d) vor der Öffnung (16) ist im Inneren des Reaktors eine - in Strömungsrichtung - von der Öffnung (16) wegweisende Umlenkwand (43) vorgesehen.

9. Reaktor nach einem der Ansprüche 1 bis 8, dadurch gekennzeichnet, dass das Fluid vor Einleitung in den Reaktor (302; 402; 2'') mit Hilfe einer Vorheizeinrichtung (5, 106; 38) beheizbar ist, die vorzugsweise als Wärmetauscher ausgebildet ist.

10. Reaktor nach einem der Ansprüche 1 bis 9, dadurch gekennzeichnet, dass zumindest in einer Zuleitung (5), insbesondere Gaszuleitung, zum Reaktor (2) eine Fördereinrichtung (13) für partikulierte Feststoffe (15) und/oder eine Flüssigkeitseinleitöffnung, z.B. nach einer Venturidüse, vorgesehen ist,
und dass bevorzugt die Zuleitung (5) als eine pneumatische Flugförderung eines fluidisierten Feststoffes ausgebildet ist, wobei vorzugsweise die Mündung der Zuleitung als Injektordüse ausgebildet ist.

Fig.1

Fig.2

Fig.3

Fig.4

14

Fig.5

Fig.6

Fig.7

Fig. 8

Fig. 9

Fig. 10

Fig. 11

Fig.12

Fig.13

Fig.14

Fig. 15

Europäisches
Patentamt

EUROPÄISCHER RECHERCHENBERICHT

Nummer der Anmeldung

EP 92 10 5191
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 706 651 (YUDOW) <br><br> * Spalte 2, Zeile 24 - Spalte 2, Zeile 33 * <br> * Spalte 2, Zeile 55 - Spalte 2, Zeile 68 * <br> * Spalte 3, Zeile 38 - Spalte 4, Zeile 31; <br> Abbildungen 1,2 * | 1,4,5, 7-9 | F24J2/06 <br> B01J19/12 |
| Y <br> A |  | 2,3,6 <br> 10 |  |
| Y | --- <br><br> DE-A-2 836 179 (MESSERSCHMITT-BÖLKOW-BLOHM) <br> * Seite 5, Zeile 18 - Seite 6, Zeile 27; <br> Abbildung 1 * | 2,3 |  |
| Y | --- <br><br> NTIS TECH NOTES. <br> Nr. 3C, März 1985, SPRINGFIELD, VA US 'AIRFLOW ASSISTS SOLAR RECEIVER' | 6 |  |
| X | --- <br><br> DE-A-2 948 355 (KWU UNION AG) <br> * Seite 3, Zeile 18 - Seite 5, Zeile 4; <br> Abbildung 1 * | 1,7 |  |
| A |  | 8 | **RECHERCHIERTE SACHGEBIETE (Int. Cl.5 )** |
| X | --- <br><br> US-A-4 312 324 (ROSS ET AL) <br> * Spalte 3, Zeile 32 - Spalte 6, Zeile 5; <br> Abbildungen 1-5 * | 1 | F24J <br> B01J |
| A | --- <br><br> US-A-2 552 237 (TROMBE) <br> * das ganze Dokument * | 1,4 |  |
| A | --- <br><br> DE-A-3 403 354 (M.A.N. AG) <br> * Seite 7, Zeile 1 - Seite 8, Zeile 26; <br> Abbildung 1 * | 1 |  |
| A | --- <br><br> FR-A-2 574 528 (M.A.N AG) <br> * Seite 3, Zeile 29 - Seite 8, Zeile 25; <br> Abbildungen 1-7 * | 1 |  |
| A | --- <br><br> US-A-4 777 934 (DE LAQUIL) <br> * Spalte 4, Zeile 7 - Spalte 5, Zeile 63; <br> Abbildung 4 * | 1 |  |

Der vorliegende Recherchenbericht wurde für alle Patentansprüche erstellt

| Recherchenort | Abschlußdatum der Recherche | Prüfer |
|---|---|---|
| DEN HAAG | 17 JULI 1992 | BELTZUNG F.C. |

Europäisches
Patentamt

EUROPÄISCHER RECHERCHENBERICHT

Nummer der Anmeldung

EP    92 10 5191
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| | --- | | |
| A | US-A-2 793 018 (TROBE)<br>* Spalte 3, Zeile 15 - Spalte 4, Zeile 11;<br>Abbildungen 1-3 * | 1-5 | |
| | --- | | |
| A | EP-A-0 399 381 (BECHTEL GROUP INC.) | | |
| | --- | | |
| A | FR-A-2 152 864 (FORD FRANCE SA) | | |
| | ----- | | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 17 JULI 1992 | BELTZUNG F.C. |